# EUROPEAN PATENT APPLICATION

(11) **EP 3 182 271 A1**
(43) Date of publication of application: **21.06.2017**
(21) Application number: 16202624.9
(22) Date of filing: 07.12.2016
(51) Int. Cl.: G06F 3/12

(54) **SETTING CONTROL METHOD AND PROGRAM**

(30) Priority: 14.12.2015 JP 2015243427
(71) Applicant: Kabushiki Kaisha Toshiba, Tokyo 105-8001 (JP); Toshiba TEC Kabushiki Kaisha, Tokyo 141-0032 (JP)
(72) Inventor: OHIRA, Shinji, Shinagawa-ku, Tokyo 141-8562 (JP)
(74) Representative: Takeuchi, Maya

(57) **Abstract**

A setting control method includes displaying a first user interface including a plurality of selectable settings including a first setting that requires one or more sub-settings to be defined, and a second setting that does not require any sub-settings to be defined, and upon detecting a selection of the first setting on the first user interface, displaying a second user interface for defining sub-settings of the first setting if the sub-settings have not yet been defined, wherein the displaying of the second user interface is bypassed if the sub-settings have already been defined. The setting control method further includes storing the first setting and the second settings.

## Description

### FIELD

Embodiments described herein relate generally to a setting control method and a program, a non-transitory computer-readable medium and a computer system.

### BACKGROUND

Recently, various suggestions have been presented regarding a user interface. For example, in a print field, a printer driver is set in a terminal, such as a personal computer, to be connected to a printer. A user can set a plurality of main setting items relating to the printer and a sub-setting item (advanced setting item) relating to each main setting item through a user interface (UI), such as a printer setting screen, based on the printer driver.

For example, an input method of the sub-setting item includes a designation input method, an automatic input method, or the like. In the designation input method, the user selects one item from a plurality of main setting items which are displayed in a list on the printer setting screen (in response to this, one item is set). After, the user executes an activation operation of an input window of the sub-setting item corresponding to the set main setting item. The input window of the sub-setting item is activated in response to the activation operation. The user inputs the sub-setting item through the input window of the sub-setting item. In addition, in the automatic input method, when the user selects one item from a plurality of main setting items displayed in a list (in response to this, one item is set), the input window of the sub-setting item relating to the one item is automatically activated. The user inputs the sub-setting item through the input window of the sub-setting item which is automatically activated.

For example, when a private print is set as a main setting item, and a password is set as a sub-setting item relating to the private print, the password is required to print out print data which is output from a terminal to printer. When the input password is identical to the set password, the printer executes printing based on the print data.

In the above-described designation input method, an activation operation of an input window of a sub-setting item is required. In some cases, the activation operation is bothersome for the user. In addition, since the activation operation by the user is required, it becomes more likely that an omission input of the sub-setting item is generated. In a case of one automatic input method, the input window of the sub-setting item is activated each time the main setting item is selected. For example, when the sub-setting item has already been set and there is no change in the setting of the sub-setting item, the input window of the sub-setting item is activated each time the main setting item is selected. Accordingly, the user becomes frustrated every time the input window of the sub-setting item is activated.

To solve such problems, there is provided a setting control method comprising:
displaying a first user interface including a plurality of selectable settings including a first setting that requires one or more sub-settings to be defined, and a second setting that does not require any sub-settings to be defined;
upon detecting a selection of the first setting on the first user interface, displaying a second user interface for defining sub-settings of the first setting if the sub-settings have not yet been defined, wherein the displaying of the second user interface is bypassed if the sub-settings have already been defined; and
storing the first setting and the second settings.

Preferably, the method further comprises:
upon detecting a selection of the second setting on the first user interface, storing the second setting.

Preferably still, the stored sub-settings are the sub-settings defined through the second user interface after the selection of the first setting on the first user interface or the sub-settings that have already been defined at the time of the selection of the first setting on the first user interface.

Preferably yet, the first user interface further includes a selectable item to display the second user interface using which the sub-settings of the first setting can be defined or changed.

Suitably, the selectable item is displayed on the first user interface together with the first setting.

Suitably still, the further comprises:
upon detecting the selection of the first setting on the first user interface, determining if the sub-settings have already been defined for the first setting.

The invention also relates to a non-transitory computer-readable medium storing instructions that, when executed by a processor, cause a computer system to perform the steps of the method as mentioned above.

The invention further concerns a computer system comprising:
a processor; and
a memory storing instructions that, when executed by the processor, cause the computer system to perform the steps of:
   displaying a first user interface including a plurality of selectable settings including a first setting that requires one or more sub-settings to be defined, and a second setting that does not require any sub-settings to be defined;
   upon detecting a selection of the first setting on the first user interface, displaying a second user interface for defining sub-settings of the first setting if the sub-settings have not yet been defined, wherein the displaying of the second user interface is bypassed if the sub-settings have already been defined; and
   storing the first setting and the second settings.

Preferably, the steps further comprise:
upon detecting a selection of the second setting on the first user interface, storing the second setting.

Preferably still, the stored sub-settings are the sub-settings defined through the second user interface after the selection of the first setting on the first user interface or the sub-settings that have already been defined at the time of the selection of the first setting on the first user interface.

Preferably yet, the first user interface further includes a selectable item to display the second user interface using which the sub-settings of the first setting can be defined or changed.

Conveniently, the selectable item is displayed on the first user interface together with the first setting.

Conveniently still, the steps further comprise:
upon detecting the selection of the first setting on the first user interface, determining if the sub-settings have already been defined for the first setting.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram of a schematic structure of an image forming system according to an embodiment.
FIG. 2 is a flow chart showing an item setting control in a UI, such as a printer setting screen or the like, according to the embodiment.
FIG. 3 is a view of a printer setting screen (a first transition state) according to the embodiment.
FIG. 4 is a view of a printer setting screen (a second transition state) according to the embodiment.
FIG. 5 is a view of a printer setting screen (a third transition state) according to the embodiment.
FIG. 6 is a view of a printer setting screen (a fourth transition state) according to the embodiment.
FIG. 7 is a view of a printer setting screen (including difference display format control icons) according to the embodiment.

### DETAILED DESCRIPTION

A setting control method includes displaying a first user interface including a plurality of selectable settings including a first setting that requires one or more sub-settings to be defined, and a second setting that does not require any sub-settings to be defined, and upon detecting a selection of the first setting on the first user interface, displaying a second user interface for defining sub-settings of the first setting if the sub-settings have not yet been defined, wherein the displaying of the second user interface is bypassed if the sub-settings have already been defined. The setting control method further includes storing the first setting and the second settings.

An embodiment will be described below with reference to the drawings.

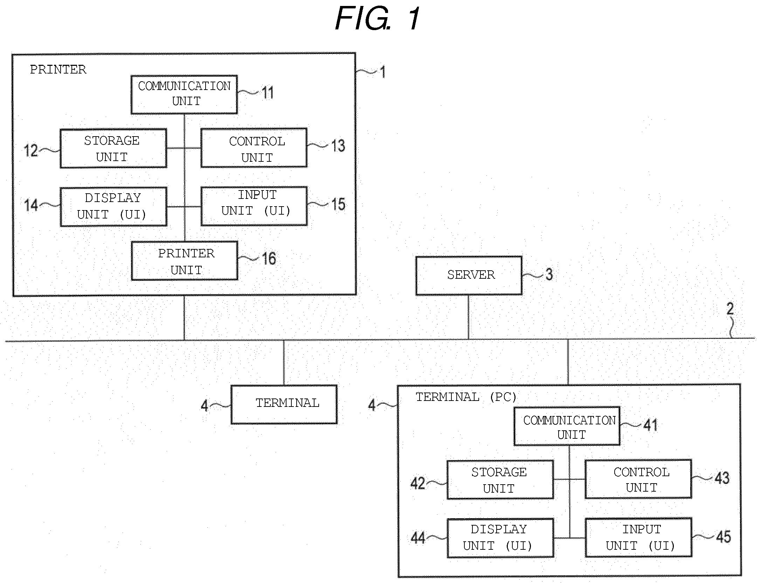

FIG. 1 is a block diagram showing an example of a schematic structure of an image forming system according to an embodiment. For example, as shown in FIG. 1, the image forming system includes a printer 1, a network 2, a server 3, and a terminal 4. For example, the printer 1 includes a communication unit 11, a storage unit 12, a control unit 13, a display unit 14, an input unit 15, and a printer unit 16. The terminal 4 is, for example, a personal computer, and includes a communication unit 41, a storage unit 42, a control unit 43, a display unit 44, and an input unit 45.

The communication unit 11 of the printer 1, e.g., a network communications adapter, is capable of communications with the communication unit 41 of the terminal 4 via the network 2 and the server 3. The storage unit 12, e.g., hard disk drive or volatile or non-volatile semiconductor memory, stores various control programs required to operate the printer 1, print data, a main setting item relating to the print (predetermined item), a sub-setting item relating to each main setting item (related item), and the like. The control unit 13, e.g., a programmed processor, controls the print corresponding to print data based on the above-described various control programs, main setting item, and sub-setting item. The printer 1 executes a print corresponding to the print data based on the print control of the control unit 13.

In addition, the display unit 14 and the input unit 15 serve as a user interface, and the main setting item and the sub-setting item can be set. For example, the input unit 15 is provided as a touch panel in response to the display unit 14. Through the touch panel, the user can select one item among a plurality of main setting items of a printer setting screen displayed on the display unit 14 or can input the sub-setting item from the sub-setting window of the printer setting screen. The control unit 13 selects the selected main setting item and the input sub-setting item. The storage unit 12 stores the settings of the main setting item and the sub-setting item.

The communication unit 41 of the terminal 4, e.g., a network communications adapter, is capable of communications with the communication unit 11 of the printer 1 via the network 2 and the server 3. The storage unit 42, e.g., hard disk drive or volatile or non-volatile semiconductor memory, stores the printer driver, the print data, the main setting item relating to the print (predetermined item), the sub-setting item relating each main setting item (related item), and the like. For example, the communication unit 41 transmits the print data, the main setting item, the sub-setting item, and the like with respect to the printer 1. The control unit 13, e.g., a programmed processor, controls the print corresponding to the print data, based on the printer driver, the main setting item, and the sub-setting item.

In addition, the display unit 44 and the input unit 45 serve as a UI, and the main setting item and the sub-setting item can be set. For example, the input unit 45 includes at least one of a mouse, a key board, a touch panel, or the like. Through the input unit 45, the user can select one item among a plurality of main setting items of a printer setting screen displayed on the display unit 44 or can input the sub-setting item from the sub-setting window of the printer setting screen. The control unit 43 sets the selected main setting item and the input sub-setting item. The storage unit 42 stores the settings of the main setting item and the sub-setting item.

The item setting control in the UI, such as a printer setting screen to be output (displayed) by the terminal 4 (the display unit 44 and the input unit 45), will be described below. Also, the description of the item setting control in the UI such as a printer setting screen to be output (displayed) by the printer 1 is the same as the above description. Accordingly, the description will be omitted.

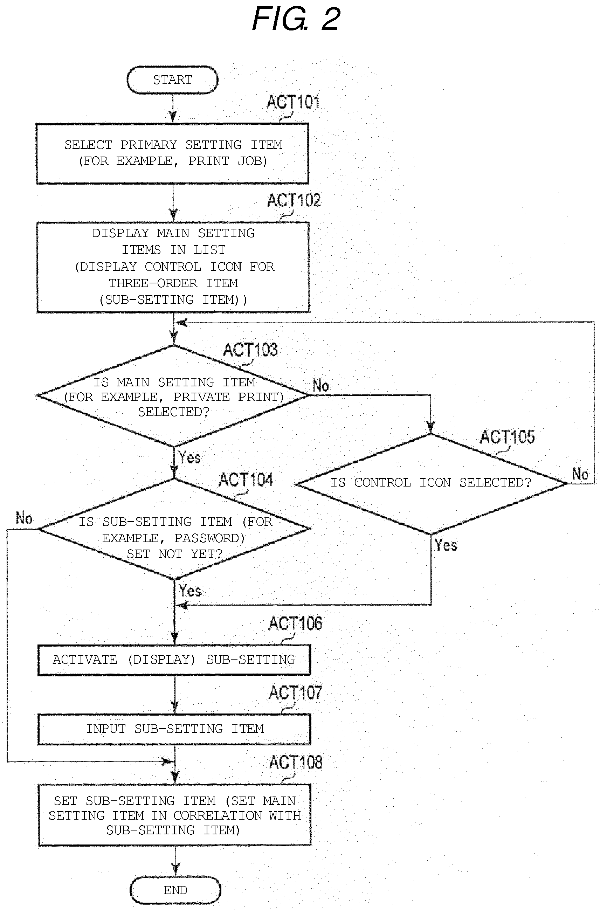

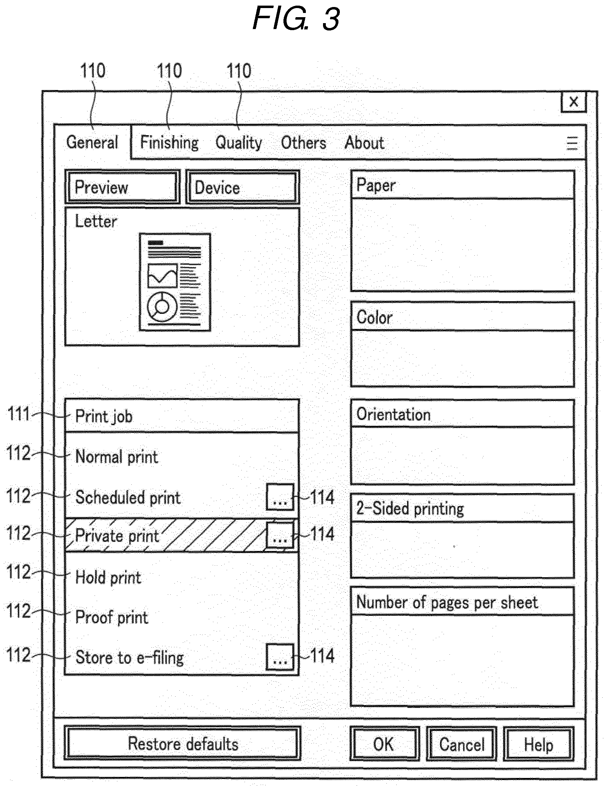

FIG. 2 is a flow chart showing an example of an item setting control in a UI, such as a printer setting screen or the like, according to the embodiment. FIG. 3 is a view showing an example of a printer setting screen (a first transition state) according to the embodiment.

The control unit 43 outputs display information for displaying a printer setting screen. In response to this, as shown in FIG. 3, the display unit 44 displays the printer setting screen. The printer setting screen includes a tab 110. As illustrated, the tab 100 includes the following selectable tabs: General, Finishing, Quality, or the like. The tab "General" includes a primary setting item 111, such as a pint job.

For example, the user selects the primary setting item 111 (for example, the print job) through the input unit 45 (ACT 101). In response to this, the control unit 43 outputs display information (first display information) for displaying main setting items 112 in a list. The main setting items 112 belong to the selected primary setting item 111 and include modes such as a normal print, a scheduled print, a private print, and the like. The scheduled print is a mode for executing a print at a designated date and time. The private print is a mode requiring a password be entered which is pre-registered when printing in order to execute printing under the condition of the suitable password entry.

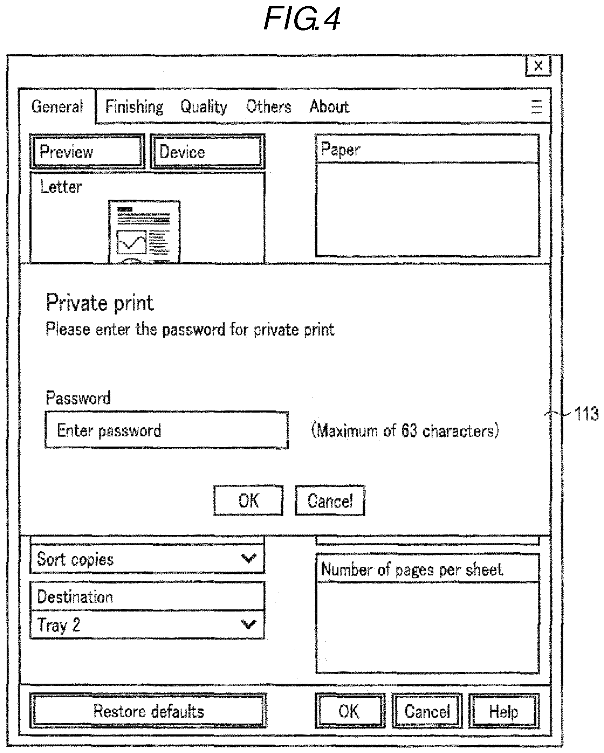

In addition, when the main setting item 112 has a third-order setting item (sub-setting item), the control unit 43 outputs display information (second display information) for displaying the instruction input unit (control icon) 114 which receives an instruction input (activation instruction input) for output (activation) of a sub-setting unit (sub-setting window) 113 (see FIG. 4) for setting the sub-setting item. In response, the display unit 44 displays the main setting items 112 in a list and displays a control icon 114 corresponding to the display of the main setting item 112 (ACT 102).

For example, as shown in FIG. 3, since a scheduled print 112 has a sub-setting item (designation print date and time or the like), the control icon 114 for activating the sub-setting window (related item setting unit) 113 of the scheduled print 112 in response to the display of the scheduled print 112 is displayed. In addition, since the private print also has the sub-setting item (password or the like), the control icon 114 for activating the sub setting window (related item setting unit) 113 of the private print 112 in response to the display of the private print 112 is displayed. Since the normal print 112 does not have the sub-setting item, the control icon 114 corresponding to the display of the normal print 112 is not displayed.

The control unit 43 selectively executes a first setting program and the second setting program according to the setting status of the sub-setting item relating to the main setting items 112. For example, when the sub-setting item is not set, the first setting program outputs (displays) the sub-setting window 113 for setting the sub-setting item in response to the selection of the main setting item 112 and receives the setting of the sub-setting item through the sub-setting window 113. When the sub-setting item is set, the settings of the sub-setting item are received by the second setting program. In addition, the second setting program directly receives the setting of the main setting item 112 in response to the selection of the main setting item 112.

For example, when the user selects private print 112 through the input unit 45 (ACT 103, YES), if the sub-setting item relating to the private print 112 is not set (ACT 104, YES), the control unit 43 activates the sub-setting window 113 corresponding to the private print 112 in response to the selection and outputs the display information for displaying the sub-setting window 113 (ACT 106). That is, even if there are no activation instruction of the sub-setting window 113 of the sub-setting item relating to the private print 112, when the sub-setting item relating to the private print 112 is not set, the control unit 43 activates the sub-setting window 113 corresponding to the selection of the private print 112 and outputs the display information for displaying the sub-setting window 113.

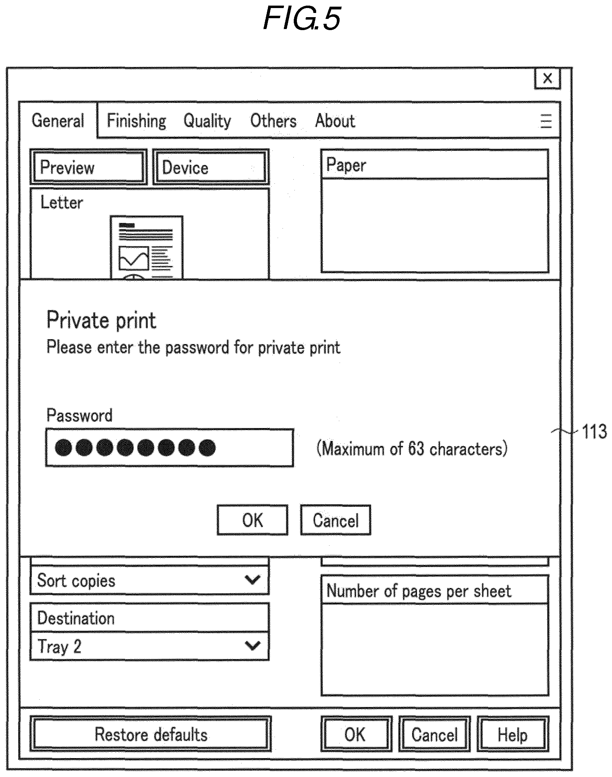

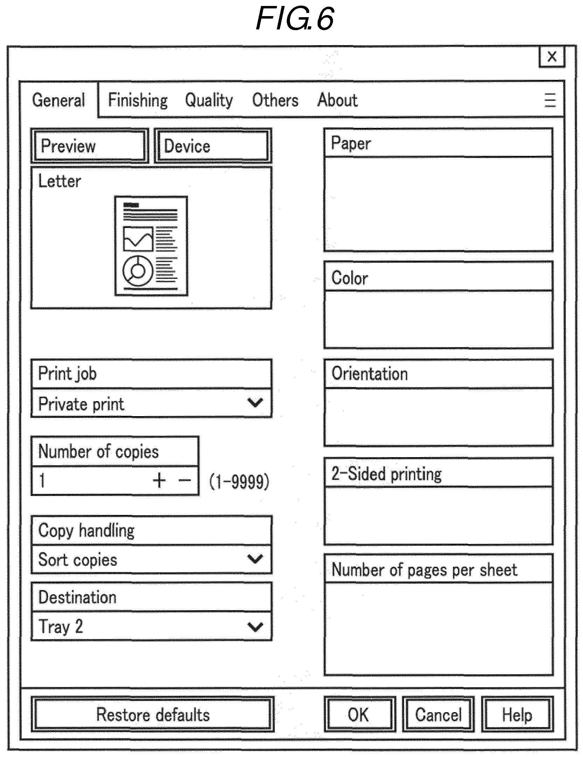

In response to this, as shown in FIG. 4, the display unit 44 displays the sub-setting window 113 of the sub-setting item relating to the private print 112. For example, in the sub-setting window 113, it is required to enter the password. For example, as shown in FIG. 5, the user enters the password with respect to the sub-setting window 113 through the input unit 45 (ACT 107). The control unit 43 manages the sub-setting item relating to the private print 112 in response to the entry of the password, and sets the private print 112 in correlation with the set password (ACT 108). The storage unit 42 stores (registers) the set password and settings of the private print. In this case, as shown in FIG. 6, the printer setting screen displays the status where the setting of the private print 112 is finished.

In this manner, when the sub-setting item is not set, the control unit 43 activates the sub-setting window 113. Accordingly, the user can input the sub-setting item through the sub-setting window 113, which is automatically activated and displayed, by only selection of the main setting item, without instructing the activation operation of the sub-setting window 113. Accordingly, the user can avoid the bothersome activation operation of the sub-setting window 113. In addition, it is possible to prevent the omission input of the sub-setting item or the like.

When the private print 112 is selected at first after the print driver is set, since the sub-setting item relating to the private print 112 is not set, the control unit 43 activates the sub-setting window 113 as shown in FIG. 4. In addition, even if the sub-setting item relating to the private print 112 has been already set, when the private print 112 is selected at first after the supply of power to the terminal 4 is started (at first after the activation or re-activation), the control unit 43 may activate the sub-setting window 113 shown in FIG. 4. Accordingly, during the activation or re-activation, it can be confirmed that the sub-setting item has been already set. Since it is also assumed that a previous user of the terminal is different from the user of the terminal after the activation or re-activation, during the activation or re-activation, it is effective that the sub-setting window 113 is activated to confirm the sub-setting item.

In addition, when the user selects the private print 112 shown in FIG. 3 through the input unit 45 (ACT 103, YES), if the sub-setting item relating to the private print 112 has been already set (ACT 104, NO), the control unit 43 sets the private print in response to the selection, without activation of the sub-setting window 113 corresponding to the private print 112 (ACT 108). That is, the private print is set (stored) in correlation with the password which has been set already. In this case, as shown in FIG. 6, the printer setting screen displays the status where the setting of the private print 112 is finished. Accordingly, when the sub-setting item has been set already, the user can avoid the bothersome activation of the sub-setting window 113.

For example, in the state where the sub-setting item relating to the private print 112 has been set already, if the user desires to change the sub-setting item, the user selects the control icon 114 corresponding to the private print 112 on the printer setting screen of FIG. 3 (ACT 105, YES) through the input unit 45. The control unit 43 activates the sub-setting window 113 corresponding to the private print 112 in response to the selection and outputs the display information (third display information) for displaying the sub-setting window 113 (ACT 106). In this case, the display unit 44 may display the sub-setting window 113, shown in FIG. 4, and may display the sub-setting window 113 as shown in FIG. 5.

For example, when emphasizing the change of the sub-setting item, the sub-setting window 113 shown in FIG. 4 is displayed to immediately receive the input of the change. In addition, when emphasizing the confirmation of the sub-setting item, the sub-setting window 113 shown in FIG. 5 is displayed, the sub-setting item which has been set already is displayed once, and the change of the sub-setting item is received as necessary. Since the sub-setting window 113 shown in FIG. 5 is a display example of the password, the password is displayed by replacing the password with symbols. Except for the password, the actual sub-setting item (information set already) is displayed. According to this, even when the sub-setting item has been set already, the user selects the control icon 114 to activate the sub-setting window 113, the sub-setting item can reset from the sub-setting window 113 or can confirm the sub-setting item.

In the above description, a case where the control unit 43 displays the control icon 114 in response to the display of the main setting item 112 is described. However, the embodiment is not limited thereto. For example, when the sub-setting item is not set, since the control unit 43 activates the sub-setting window 113 in response to the selection of the main setting item 112, the control icon 114 may not display in response to the main setting item 112. When the sub-setting item has been set already, since the control unit 43 does not activate the sub-setting window 113 in response to the selection of the main setting item 112, the control icon 114 is displayed in response to the main setting item 112. Accordingly, the user can know the setting status of the sub-setting item from the present or absence of the display of the control icon 114.

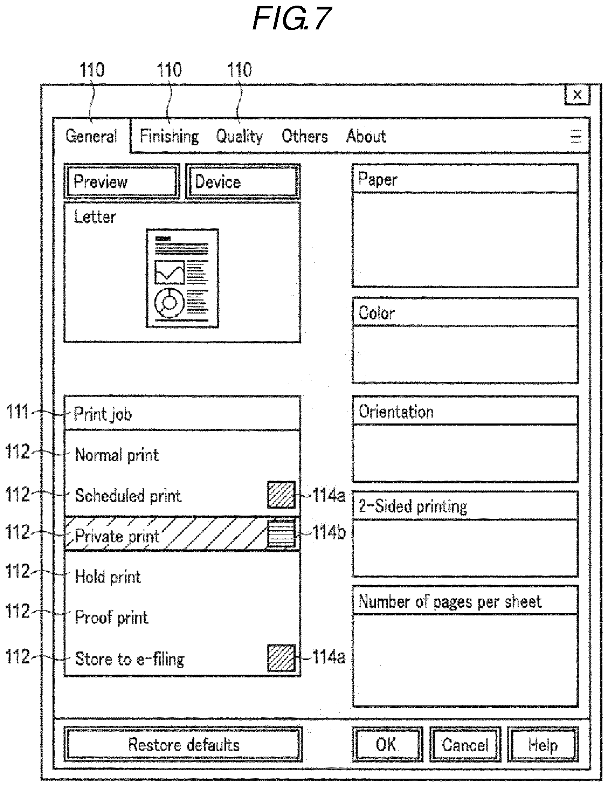

Alternatively, after the control icon 114 is displayed in response to the main setting item 112 having the sub-setting item, the control icon 114 may be displayed in a different format according to the setting state of the sub-setting item. For example, as shown in FIG. 7, when the sub-setting item of the schedule print 112 has been set already, a control icon 114a with a first format control (for example, a first color, a symbol, or a character) is displayed in response to the schedule print 112, and when the sub-setting item of the private print 112 is not set, a control icon 114b with a second display format (for example, a second color, a symbol, and a character) is displayed in response to the private print 112. According to this, the user can determine whether the sub-setting item has been set already or not set by watching the control icon 114a (for example, blue or set already) or the control icon 114b (for example, red or not set). According to this, it can prevent an erroneous selection of the control icon 114a or 114b against the intention of the user.

Alternatively, the main setting items 112 with different display formats may be displayed according to the setting state of the sub-setting item. For example, when the sub-setting item of the schedule print 112 has been set already, the schedule print 112 with the first display format (for example, a first color, a symbol, or a character) is displayed, and when the sub-setting item of the private print 112 is not set, the schedule print 112 with the second display format (for example, a second color, a symbol, or a character) is displayed. According to this, the user can determine whether the sub-setting item has been set already or not set by watching the item display of the schedule print 112. According to this, it can prevent an erroneous selection of the control icon 114 against the intention of the user.

As described above, the control unit 43 activates the sub-setting window 113 in response to the selection of the main setting item 112 corresponding to the setting status (for example, not set) of the sub-setting item, receives the setting of the sub-setting item through the sub-setting window 113, and terminates the settings of the main setting item 112 and the sub-setting item. According to this, the activation operation of the sub-setting window 113 from the user can be omitted. In addition, it is possible to prevent the omission input of the sub-setting item or the like. Furthermore, corresponding to the setting status of the sub-setting item (for example, set already), the setting of the main setting item 112 is terminated without the activation of the sub-setting window 113 in response to the selection of the main setting item 112. According to this, the user can be liberated from each setting operation of the sub-setting item. Furthermore, by providing the control icons 114 in correlation with the main setting items 112, the activation of the sub-setting window 113 can be controlled through the control icon 114 from the intention of the user. In addition, the setting status of the sub-setting item can be confirmed from display format or the presence or absence of the display of the control icon 114.

In the embodiment, the activation of the sub-setting window 113 for input the sub-setting item is described, and for example, as shown in FIGS. 4 and 5, an example that the sub-setting window 113 is displayed on the printer setting screen is described. However, it is not limited to the example. For example, by providing the sub-setting item on a section of the printer setting screen, the sub-setting item is displayed with the first display format (active display) at a timing when the input of the sub-setting item is required, and by receiving the input of the sub-setting item, the sub-setting item may be displayed with the second display format (non-active display) at a timing when the input is not required.

In addition, the control unit 43 can set the sub-setting item, fixedly with respect to each print job and may set the sub-setting item for each print job. For example, the control unit 43 activates a predetermined application job corresponding to the user operation to prepare the print job. In a case where the sub-setting item is fixedly set (first sub-setting system), if the sub-setting item is set once, when the predetermined application is activated and the print job is prepared, the sub-setting item set already is effective with respect to the print job. In a case where the sub-setting item is set for each print job (second sub-setting system), even when the sub-setting item is set once, the sub-setting item which is set by the termination of the predetermined application is canceled, and when the predetermined application is activated and the application is prepared again, since the sub-setting item is not set, the setting of the sub-setting item is required.

For example, the printer setting screen may include information indicating that which system is selected between the first sub-setting system and the second sub-setting system. For example, the information indicating that which system is selected between the first sub-setting system and the second sub-setting system is displayed in response to the primary setting item 111 such as a print job or the like. Alternatively, the information indicating that which system is selected between the first sub-setting system and the second sub-setting system is displayed in response to the secondary setting item 112 such as a private print or the like.

All of the procedure of the control, the process, and the display can be executed by software. Therefore, by only installing a program to be used to execute the process procedure to the printer 1 or the terminal 4 through a computer readable storage medium in which the program is stored and executing the program, the control, and process, and display can be easily realized in the printer 1 or the terminal 4.

For example, the program is read from the computer readable storage medium through the input unit 15 or 45, the read program is stored to the storage unit 12 or 42, and the installation of the program can be terminated. Alternatively, the program is downloaded through the communication unit 11 or 41, the program downloaded is stored in the storage unit 12 or 42, or the like, and an installation of the program can be terminated. Accordingly, the printer 1 or the control unit 13 or 43 of the terminal 4 can easily realize the control, the process, and the display based on the installed program.

While certain embodiments have been described, these embodiments have been presented by way of example only, and are not intended to limit the scope of the inventions. Indeed, the novel embodiments described herein may be embodied in a variety of other forms. Furthermore, various omissions, substitutions, and changes in the form of the embodiments described herein may be made without departing from the framework of the inventions. The accompanying claims and their equivalents are intended to cover such forms or modifications as would fall within the scope and framework of the inventions.

## Claims

1. A setting control method comprising:
displaying a first user interface including a plurality of selectable settings including a first setting that requires one or more sub-settings to be defined, and a second setting that does not require any sub-settings to be defined;
upon detecting a selection of the first setting on the first user interface, displaying a second user interface for defining sub-settings of the first setting if the sub-settings have not yet been defined, wherein the displaying of the second user interface is bypassed if the sub-settings have already been defined; and
storing the first setting and the second settings.

2. The method according to claim 1, further comprising:
upon detecting a selection of the second setting on the first user interface, storing the second setting.

3. The method according to claim 1 or 2, wherein the stored sub-settings are the sub-settings defined through the second user interface after the selection of the first setting on the first user interface or the sub-settings that have already been defined at the time of the selection of the first setting on the first user interface.

4. The method according to any one of claims 1 to 3, wherein the first user interface further includes a selectable item to display the second user interface using which the sub-settings of the first setting can be defined or changed.

5. The method according to claim 4, wherein the selectable item is displayed on the first user interface together with the first setting.

6. The method according to any one of claims 1 to 5, further comprising:
upon detecting the selection of the first setting on the first user interface, determining if the sub-settings have already been defined for the first setting.

7. A non-transitory computer-readable medium storing instructions that, when executed by a processor, cause a computer system to perform the steps of the method according to any one of claims 1 to 6.

8. A computer system comprising:
a processor; and
a memory storing instructions that, when executed by the processor, cause the computer system to perform the steps of:
displaying a first user interface including a plurality of selectable settings including a first setting that requires one or more sub-settings to be defined, and a second setting that does not require any sub-settings to be defined;
upon detecting a selection of the first setting on the first user interface, displaying a second user interface for defining sub-settings of the first setting if the sub-settings have not yet been defined, wherein the displaying of the second user interface is bypassed if the sub-settings have already been defined; and
storing the first setting and the second settings.

9. The computer system according to claim 8, wherein the steps further comprise:
upon detecting a selection of the second setting on the first user interface, storing the second setting.

10. The computer system according to claim 8 or 9 , wherein the stored sub-settings are the sub-settings defined through the second user interface after the selection of the first setting on the first user interface or the sub-settings that have already been defined at the time of the selection of the first setting on the first user interface.

11. The computer system according to any one of claims 8 to 10, wherein the first user interface further includes a selectable item to display the second user interface using which the sub-settings of the first setting can be defined or changed.

12. The computer system according to claim 11, wherein the selectable item is displayed on the first user interface together with the first setting.

13. The computer system according to any one of claims 8 to 12, wherein the steps further comprise:
upon detecting the selection of the first setting on the first user interface, determining if the sub-settings have already been defined for the first setting.
